# EUROPEAN PATENT APPLICATION

(11) **EP 1 627 902 A1**
(43) Date of publication of application: **22.02.2006**
(21) Application number: 05017855.7
(22) Date of filing: 17.08.2005
(51) Int. Cl.: C09D 11/00

(54) **Ink composition, inkjet ink and inkjet ink set**

(30) Priority: 17.08.2004 JP 2004237050
(71) Applicant: FUJI PHOTO FILM CO., LTD., Minami-Ashigara-shi, Kanagawa (JP)
(72) Inventor: Taguchi, Toshiki, Fujinomiya-shi Shizuoka (JP)
(74) Representative: HOFFMANN EITLE

(57) **Abstract**

An ink composition comprising: a coloring agent; and a betaine compound comprising: a group containing an amine form nitrogen atom; and a group containing a phosphonic acid structure or a phosphoric acid structure.

## Description

### Background of the Invention

### 1. Field of the Invention

This invention relates to an ink composition being excellent in image durability, an inkjet ink and an ink set.

### 2. Description of the Related Art

With the recent diffusion of computers, inkjet printers have been widely employed in printing on papers, films, fabrics and so on not only in offices but also in homes.

Inkjet recording methods include a system of jetting ink droplets under pressurization with the use of a piezo device, a system of foaming an ink by heating and thus jetting ink droplets, a system using ultrasonic wave, and a system of electrostatically sucking and jetting ink droplets. As ink compositions for inkjet recording by these systems, use is made of water-base inks, oil-base inks or solid (molten) inks. Among these inks, water-base inks are mainly employed from the viewpoints of production, handling properties, odor, safety and so on.

Requirements for a coloring agent to be used in these inkjet recording inks are as follows: being highly soluble in solvents, enabling high density recording, having a favorable color hue, having high fastness to light, heat, air, water and chemicals, having favorable fixation properties on an image receiving material with little bleeding, being excellent in storage properties as an ink, having no toxicity, having a high purity, and being available at a low cost. However, it is highly difficult to search for a coloring agent satisfying these requirements at a high level.

Although various dyes and pigments have been already proposed and practically employed in inkjet recording, no coloring agent satisfying all of the above requirements has been found out yet. Using well-known dyes and pigments typified by those having color indexes (C.I.) assigned thereto, it is highly difficult to satisfy both of such color hue and fastness as required in inkjet recording inks. Investigations have been made on dyes having favorable color hue and high fastness to develop excellent coloring agents for inkjet printing. However, it is found out that these coloring agents are seriously inferior in fastness to ozone and fastness to light to silver salt photography and, therefore, further improvements are required.

In the pamphlet of WO 03/066756, a phosphoric acid group and a phosphonic acid group are cited as anionic sites of a betaine surfactant. However, no surfactant having such acid groups is disclosed in this pamphlet. Moreover, the major dyes presented in this pamphlet are azo dyes and water-soluble phthalocyanine dyes having spectroscopic absorption peaks at 500 to 580 nm and this document aims at relieving image bleeding with the use of these dyes.

### Summary of the Invention

The problem that the invention is to solve is to provide an ink composition, an inkjet ink and an ink set having been improved in fastness.

The problem of the invention has been solved by the following means.
(1) An ink composition comprising:
   a coloring agent; and
   a betaine compound comprising: a group containing an amine form nitrogen atom; and a group containing a phosphonic acid structure or a phosphoric acid structure.
(2) The ink composition as described in (1) above, which further comprises at least one of a water and a water-miscible organic solvent,
   wherein the betaine compound is a compound represented by formula (1):

   formula (1): Z-R-Q

   wherein Z represents a group containing an amine form nitrogen atom;
   Q represents a group containing a phosphonic acid structure or a phosphoric acid structure; and
   R represents a single bond or a linking group.
(3) The ink composition as described in (1) or (2) above,
   wherein the betaine compound comprises an oil-soluble group having 8 or more carbon atoms.
(4) The ink composition as described in any of (1) to (3) above,
   wherein the coloring agent is a dye.
(5) The ink composition as described in any of (1) to (4) above,
   wherein the amine form nitrogen atom is an amine form nitrogen atom constituting a primary amine, a secondary amine, a tertiary amine or a quaternary ammonium ion.
(6) The ink composition as described in any of (1) to (4) above,
   wherein the amine form nitrogen atom is a hydrazine form nitrogen atom.
(7) The ink composition as described in any of (1) to (4) above,
   wherein the amine form nitrogen atom is a hydroxylamine form nitrogen atom.
(8) The ink composition as described in any of (1) to (4) above,
   wherein the amine form nitrogen atom is a nitrogen atom with no lone pair in a conjugated system in a 5-membered aromatic heterocycle contained in a pyrazole, an imidazole, a triazole, a tetrazole or a fused polycyclic hetero aromatic compound thereof.
(9) The ink composition as described in any of (1) to (4) above,
   wherein the amine form nitrogen atom is a nitrogen atom contained in a 6-membered aromatic heterocycle.
(10) The ink composition as described in any of (1) to (4) above,
   wherein the amine form nitrogen atom is a nitrogen atom conjugated with an imino group.
(11) The ink composition as described in any of (1) to (10) above,
   wherein the ink composition comprises the betaine compound in an amount of from 0.01 to 20% by mass.
(12) An inkjet ink comprising an ink composition as described in any of (1) to (11) above.
(13) An inkjet ink set comprising at least one inkjet ink as described in (12) above.

### Detailed Description of the Invention

Now, the invention will be illustrated in greater detail. The ink composition according to the invention (preferably a inkjet ink) has a characteristic of containing a betaine compound having a group containing an amine form nitrogen atom and a group containing a phosphonic acid or phosphoric acid structure. Among betaine compounds, it is preferable in the invention to employ a compound represented by the general formula (1) as described above. In this formula, Z represents a group containing an amine form nitrogen atom.

An amine form nitrogen atom means a nitrogen atom capable of exhibiting basicity in a molecule. Examples of fundamental structures containing such a nitrogen atom are as follows.
[1] An amine form nitrogen atom constituting a primary amine, a secondary amine, a tertiary amine or a quaternary ammonium ion.
[2] A hydrazine form nitrogen atom constituting hydrazine, semicarbazide, thiosemicarbazide, sulfohydrazide, phosphohydrazide, etc.
[3] A hydroxylamine form nitrogen atom such as hydroxylamine or carbonyloxyamine.
[4] A nitrogen atom with no lone pair in a conjugated system in a 5-membered aromatic heterocycle contained in pyrazole, imidazole, triazole, tetrazole or a fused polycyclic hetero aromatic compound thereof.
[5] A nitrogen atom contained in a 6-membered aromatic heterocycle such as pyridine, pyridazine, pyrimidine or pyrazine ring.
[6] A nitrogen atom conjugated with an imino group contained in amidine, guanidine, etc.

Q represents a group containing a phosphonic acid or phosphoric acid structure.

The term a group containing a phosphonic acid or phosphoric acid structure as used herein means a group comprising a moiety obtained by removing a hydrogen atom from phosphonic acid or phosphoric acid. This group may have a substituted structure, i.e., having been substituted at OH by an alkyl group, an aryl group, etc. In the betaine compound, therefore, such a group is attached to the group containing an amine form nitrogen atom either directly or via a linking group.

As the phosphonic acid, use may be made of various ones including alkylphosphonic acids, arylphosphonic acids, dialkylphosphonic acids, diarylphosphonic acids and so on. As the phosphoric acid, use may be made of either trivalent phosphorous acid or pentavalent phosphoric acid. It may be partly esterified. R represents a single bond (-) or a divalent linking group.

As the divalent linking group, a divalent linking group having an alkylene group or an arylene group as the fundamental structural unit is preferable. It may have a hetero atom such as an oxygen atom, a sulfur atom or a nitrogen atom in its major linking chain. This linking group may have various substituents.

Examples of the substituent include alkyl groups (preferably having from 1 to 20 carbon atoms, still preferably from 1 to 12 carbon atoms and particularly preferably from 1 to 8 carbon atoms, such as methyl, ethyl, iso-propyl, tert-butyl, n-octyl, n-decyl, n-hexadecyl, cyclopropyl, cyclopentyl and cyclohexyl), alkenyl groups (preferably having from 2 to 20 carbon atoms, still preferably from 2 to 12 carbon atoms and particularly preferably from 2 to 8 carbon atoms, such as vinyl, allyl, 2-butenyl and 3-pentenyl), alkynyl groups (preferably having from 2 to 20 carbon atoms, still preferably from 2 to 12 carbon atoms and particularly preferably from 2 to 8 carbon atoms, such as propargyl and 3-pentynyl), aryl groups (preferably having from 6 to 30 carbon atoms, still preferably from 6 to 20 carbon atoms and particularly preferably from 6 to 12 carbon atoms, such as phenyl, p-methylphenyl and naphthyl), amino groups (preferably having from 0 to 20 carbon atoms, still preferably from 0 to 12 carbon atoms and particularly preferably from 0 to 6 carbon atoms, such as amino, methylamino, dimethylamino, diethylamino, diphenylamino and dibenzylamino), alkoxy groups (preferably having from 1 to 20 carbon atoms, still preferably from 1 to 12 carbon atoms and particularly preferably from 1 to 8 carbon atoms, such as methoxy, ethoxy and butoxy), aryloxy groups (preferably having from 6 to 20 carbon atoms, still preferably from 6 to 16 carbon atoms and particularly preferably from 6 to 12 carbon atoms, such as phenyloxy and 2-napthyloxy), acyl groups (preferably having from 1 to 20 carbon atoms, still preferably from 1 to 16 carbon atoms and particularly preferably from 1 to 12 carbon atoms, such as acetyl, benzoyl, formyl and pivaloyl), alkoxycarbonyl groups (preferably having from 2 to 20 carbon atoms, still preferably from 2 to 16 carbon atoms and particularly preferably from 2 to 12 carbon atoms, such as methoxycarbonyl and ethoxycarbonyl), aryloxycarbonyl groups (preferably having from 7 to 20 carbon atoms, still preferably from 7 to 16 carbon atoms and particularly preferably from 7 to 10 carbon atoms, such as phenyloxycarbonyl), acyloxy groups (preferably having from 2 to 20 carbon atoms, still preferably from 2 to 16 carbon atoms and particularly preferably from 2 to 10 carbon atoms, such as acetoxy and benzoyloxy), acylamino groups (preferably having from 2 to 20 carbon atoms, still preferably from 2 to 16 carbon atoms and particularly preferably from 2 to 10 carbon atoms, such as acetylamino and benzoylamino), alkoxycarbonylamino groups (preferably having from 2 to 20 carbon atoms, still preferably from 2 to 16 carbon atoms and particularly preferably from 2 to 12 carbon atoms, such as methoxycarbonylamino), aryloxycarbonylamino groups (preferably having from 7 to 20 carbon atoms, still preferably from 7 to 16 carbon atoms and particularly preferably from 7 to 12 carbon atoms, such as phenyloxycarbonylamino), sulfonylamino groups (preferably having from 1 to 20 carbon atoms, still preferably from 1 to 16 carbon atoms and particularly preferably from 1 to 12 carbon atoms, such as methanesulfonylamino and benzenesulfonylamino), sulfamoyl groups (preferably having from 0 to 20 carbon atoms, still preferably from 0 to 16 carbon atoms and particularly preferably from 0 to 12 carbon atoms, such as sulfamoyl, methylsulfamoyl, dimethylsulfamoyl and phenylsulfamoyl), carbamoyl groups (preferably having from 1 to 20 carbon atoms, still preferably from 1 to 16 carbon atoms and particularly preferably from 1 to 12 carbon atoms, such as carbamoyl, methylcarbamoyl, diethylcarbamoyl and phenylcarbamoyl), alkylthio groups (preferably having from 1 to 20 carbon atoms, still preferably from 1 to 16 carbon atoms and particularly preferably from 1 to 12 carbon atoms, such as methylthio and ethyltio), arylthio groups (preferably having from 6 to 20 carbon atoms, still preferably from 6 to 16 carbon atoms and particularly preferably from 6 to 12 carbon atoms, such as phenylthio), sulfonyl groups (preferably having from 1 to 20 carbon atoms, still preferably from 1 to 16 carbon atoms and particularly preferably from 1 to 12 carbon atoms, such as mesyl and tosyl), sulfinyl groups (preferably having from 1 to 20 carbon atoms, still preferably from 1 to 16 carbon atoms and particularly preferably from 1 to 12 carbon atoms, such as methanesulfinyl and benzenesulfinyl), ureido groups (preferably having from 1 to 20 carbon atoms, still preferably from 1 to 16 carbon atoms and particularly preferably from 1 to 12 carbon atoms, such as ureido, methylureido and phenylureido), phosphoramido groups (preferably having from 1 to 20 carbon atoms, still preferably from 1 to 16 carbon atoms and particularly preferably from 1 to 12 carbon atoms, such as diethylphosphoramido and phenylphosphoramido), hydroxy group, mercapto group, halogen atoms (such as fluorine atom, chlorine atom, bromine atom and iodine atom), cyano group, sulfo group, carboxyl group, nitro group, hydroxamate group, sulfino group, hydrazino group, imino group, heterocyclic groups (preferably having from 1 to 30 carbon atoms and still preferably from 1 to 12 carbon atoms and having, as a hetero atom, nitrogen atom, oxygen atom or sulfur atom, more specifically, imidazoyl, pyridyl, quinolyl, furyl, thienyl, piperidyl, morpholino, benzoxazolyl, benzoimidazolyl, benzothiazolyl, carbozolyl and azepinyl), silyl groups (preferably having from 3 to 40 carbon atoms, still preferably from 3 to 30 carbon atoms and particularly preferably from 3 to 24 carbon atoms, such as trimethylsilyl and triphenylsilyl) and so on. Such a substituent may be further substituted. In the case of having two or more substituents, these substituents may be either the same or different. If possible, these substituents may be bonded together to form a ring.

A fundamental structure of the compound represented by the general formula (1) resides in that the molecule forms a betaine compound owing to the cationic nature exhibited by the amine form nitrogen atom and the anionic nature exhibited by the phosphorus atom-containing acid. Among all, it is preferable that the compound has an oil-soluble group, still preferably an oil-soluble group having 8 or more carbon atoms, which imparts surface activity thereto, as a substituent.

The oil-soluble group may be in various forms. For example, use may be made of alkyl groups (being optionally substituted and preferably having from 1 to 20 carbon atoms, still preferably having from 8 to 20 carbon atoms, such as methyl, ethyl, propyl, butyl, hexyl, octyl, dodecyl, cetyl, stearyl and oleyl), aryl groups (being optionally substituted and preferably having from 6 to 20 carbon atoms, such as phenyl, toyl, xylyl, naphthyl, cumyl and dodecylphenyl) and heterocyclic groups (being optionally substituted and preferably having from 2 to 20 carbon atoms, such as pyridyl and quinolyl). These substituents may be bonded together to form a cyclic structure. Among these substituents, alkyl groups are particularly preferred.

The compound of the general formula (1) may form a polymer compound containing the partial structure thereof. In the case of a polymer, it may be either a pendant polymer having the partial structure in a vinyl-polymerizable group or a polymer having the structural unit in the main chain thereof.

As the polymer, a water-soluble polymer is preferred and its weight-average molecular weight ranges from 1000 to 1000000, preferably from 5000 to 100000.

Next, preferable examples of the compounds according to the invention will be illustrated. However, it is needless to say that the invention is not restricted thereto.

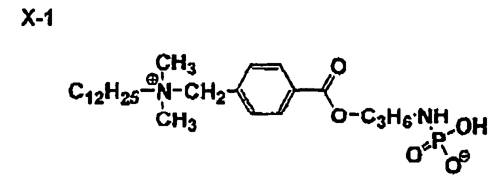

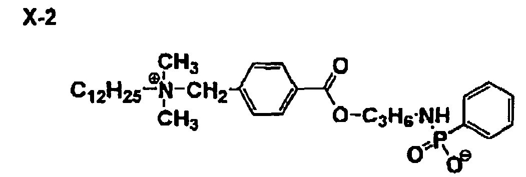

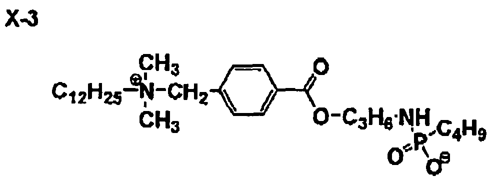

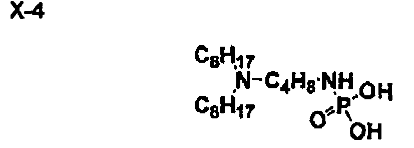

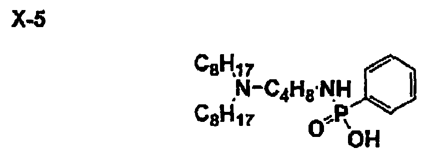

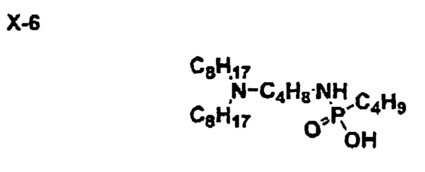

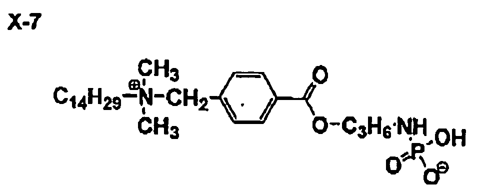

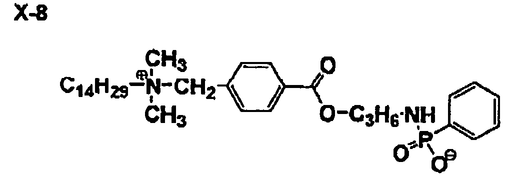

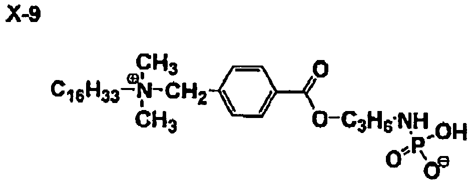

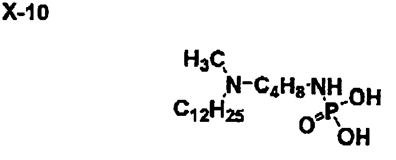

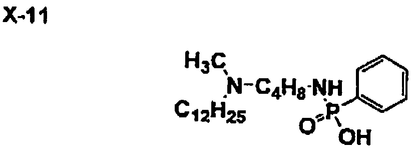

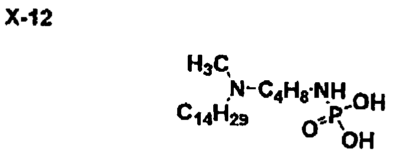

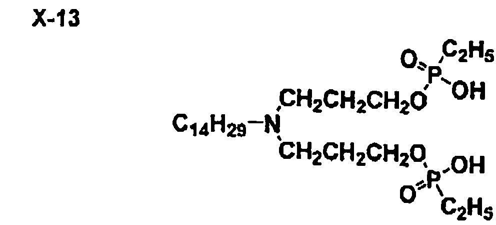

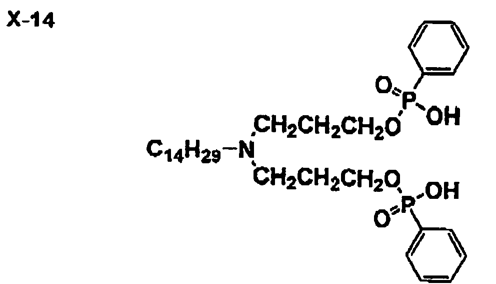

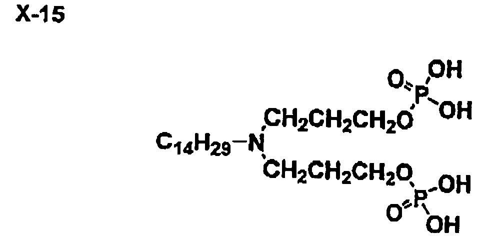

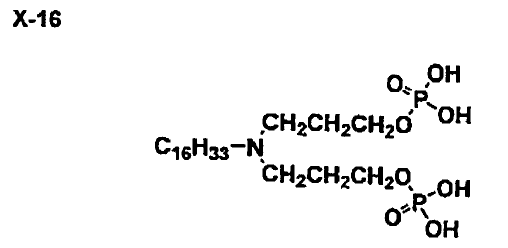

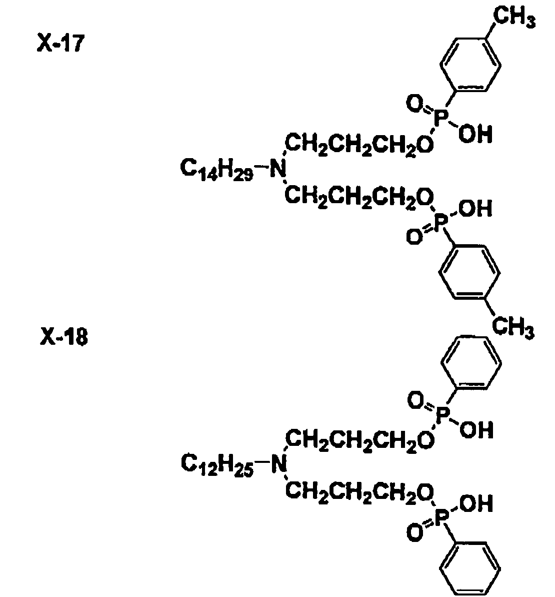

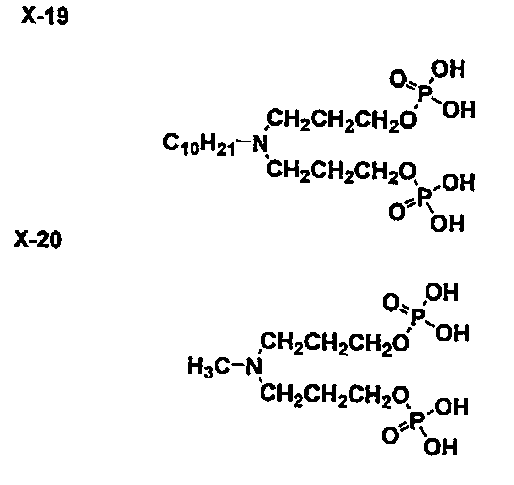

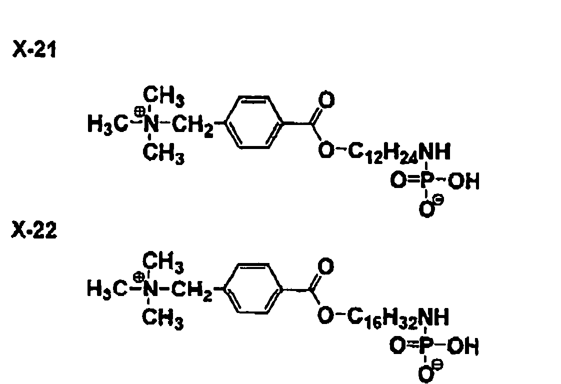

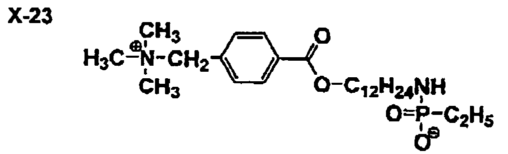

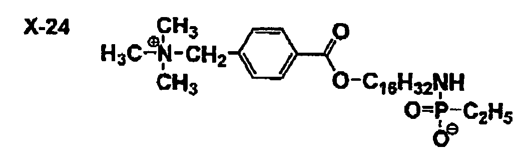

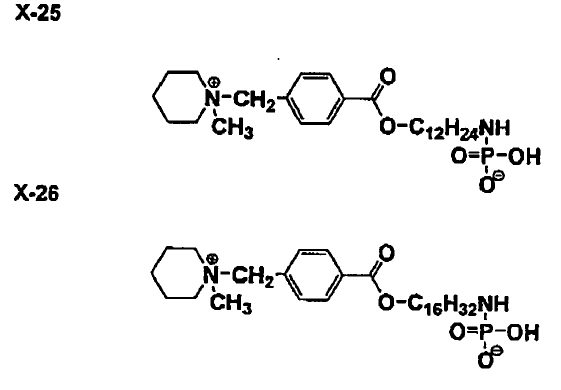

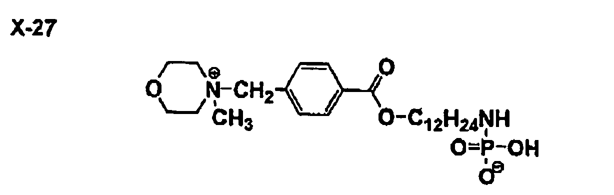

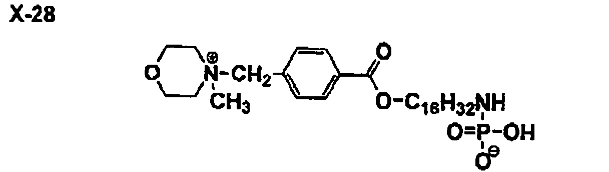

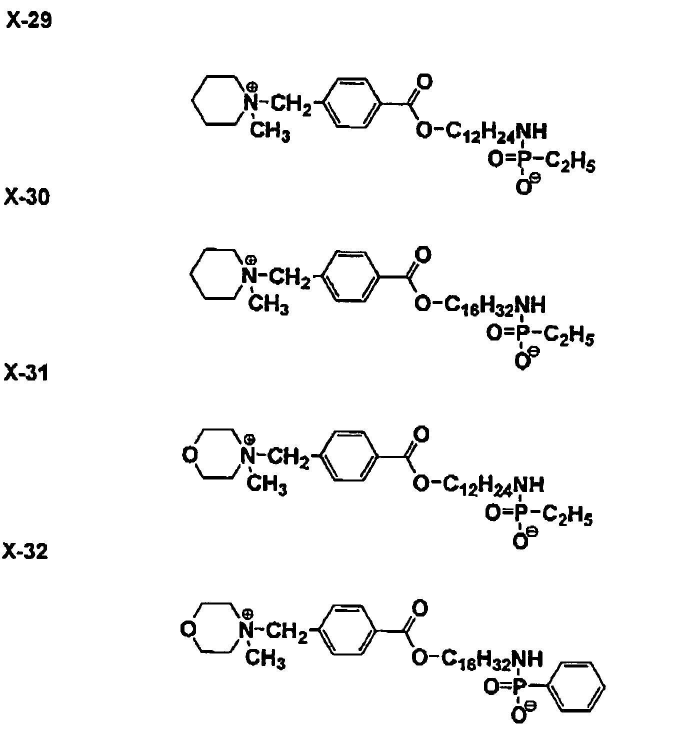

The content of the betaine compound according to the invention in the ink composition ranges from 0.01 to 20% by mass, preferably from 0.1 to 10% by mass and still preferably from 0.5 to 5% by mass. (In this specification, % by mass is equal to % by weight.)

The ink for inkjet recording according to the invention is usable not only in forming a monocolor image but also forming a full-color image. To form a full-color image, use can be made of a magenta color ink, a cyan color ink, a yellow color ink and a black color ink.

In the case of an ink for inkjet recording, it is preferable to use a dye as a coloring agent and a water-soluble dye is still preferable.

As a yellow dye, use can be made of an arbitrary one. Examples of the yellow dye include aryl or heteryl azo dyes having, for example, phenols, naphthols, anilines, heterocycles such as pyrazolones, pyridones or open-chain active methylene compounds as a coupling component (hereinafter referred to as a coupler component); azomethine dyes having, for example, open-chain active methylene compounds as a coupler component; methine dyes such as a benzylidene dye and a monomethine oxol dye; and quinone dyes such as a naphthoquinone dye and an anthraquinone dye. Examples of other dye species include quinophthalone dyes, nitro-nitroso dyes, acridine dyes and acridinone dyes. Namely, use can be made of dyes described in, for example, Japanese Patent Application 2003-362335.

As a magenta dye, use can be made of an arbitrary one. Examples of the magenta dye include aryl or heteryl azo dyes having, for example, phenols, naphthols or anilines, heterocycles such as pyrazine or open-chain active methylene compounds as a coupling component (hereinafter referred to as a coupler component); azomethine dyes having, for example, open-chain active methylene compounds as a coupling component; and anthrapyridone dyes. Namely, use can be made of dyes described in, for example, Japanese Patent Application 2003-309137.

As a cyan dye, use can be made of an arbitrary one. Examples of the cyan dye include aryl or heteryl azo dyes having, for example, phenols, naphthols or anilines as a coupler component; azomethine dyes having, for example, heterocycles such as phenols, naphthols or pyrolotriazole as a coupler component; polymethine dyes such as a cyanine dye, an oxonol dye and a merocyanine dye; carbonium dyes such as a diphenylmethane dye, a triphenylmethane dye and a xanthene dye; phthalocyanine dyes; anthraquinone dyes; and indigo-thioindigo dyes. Namely, use can be made of dyes described in, for example, Japanese Patent Application 2002-26838.

As a black dye, use can be made of an arbitrary one. For example, it is preferable to use black ink compositions described in Japanese Patent Application 2003-432210 and Japanese Patent Application 2004-168046.

Such a dye may be one which would not develop a color (for example, yellow, cyan, etc.) until a part of its chromophore is dissociated. In this case, the counter ion may be either an inorganic cation such as an alkali metal or ammonium or an organic cation such as pyridinium or a quaternary ammonium salt. It may be a polymer cation having the same in its partial structure.

The ink composition according to the invention can be prepared by adding a coloring agent (preferably a dye) in an aqueous medium. The addition may be preferably made by, for example, dissolution and/or dispersion. The term "aqueous medium" as used herein means water optionally containing a solvent such as a water-miscible organic solvent.

The ink composition according to the invention is preferably an ink composition which comprises a dye dissolved and/or dispersed in water or a water-miscible organic solvent. In particular, an aqueous solution-type ink composition prepared by using a water-soluble dye is preferred.

The above-described water-miscible organic solvent usable in the invention is a material which also serves as an anti-drying agent, a penetration promoter, a moistening agent, etc. for the inkjet ink. A water-miscible organic solvent having a high boiling point is usually employed. Examples of such a compound include alcohols (for example, methanol, ethanol, propanol, isopropanol, butanol isobutanol, sec-butanol, t-butanol, pentanol, hexanol, cyclohexanol and benzyl alcohol), polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerol, hexanetriol and thiodiglycol), glycol derivatives (for example, ethylene glycol monometyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether and ethylene glycol monophenyl ether), amines (for example, ethanolamine, diethanolamine, triethanolamine, N-methyldiethanolamine, N-ethyldiethanolamine, morpholine, N-ethylmorpholine, ethylenediamine, diethylenetriamine, triethylenetetramine, polyethyleneimine and tetramethylpropylenediamine) and other polar solvents (for example, formamide, N,N-dimethylformamide, N,N-dimethylacetamide, dimethyl sulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile and acetone). Two or more of these water-miscible organic solvents may be used together.

Among them, alcoholic solvents are preferred. It is particularly preferable that the ink composition according to the invention contains a water-soluble organic solvent having a boiling point of 150°C or higher. For example, 2-pyrrolidone may be selected from among those cited above.

These water-miscible organic solvents may be contained in the ink composition preferably in a total amount of form 5 to 60% by mass, still preferably from 10 to 45% by mass.

In the case of using a water-soluble dye, it is preferable to prepare the ink composition according to the invention by first dissolving the dye in water and then adding various solvents and additives thereto followed by dissolution and mixing, thereby giving a homogeneous ink composition.

For the dissolution, use can be made of various methods such as dissolution under stirring, dissolution under ultrasonication, dissolution by shaking, etc. Among all, the stirring method is preferably employed. In the case of stirring, use can be made of various methods publicly known in the art, for example, fluidization stirring, stirring with the use of shear force (an inversion agitator, a dissolver, etc.) and so on. It is also preferable to employ a stirring system with the use of the shear force against the container bottom such as a magnetic stirrer.

A surfactant may be added to the ink composition according to the invention to thereby control its physical liquid properties. Thus, excellent effects of, for example, improving the jetting stability, improving the water-proofness of an image and preventing the print from bleeding can be established.

Examples of the surfactant include anionic surfactants such as sodium dodecyl sulfate, sodium dodecyloxysulfonate and sodium alkylbenzenesulfonate, cationic surfactants such as cetylpyridinium chloride, trimethylcetylammonium chloride and tetrabutylammonium chloride, and nonionic surfactants such as polyoxyethylene nonyl phenyl ether, polyoxyethylene naphthyl ether and polyoxyethylene octyl phenyl ether. Among all, it is preferable to use a nonionic surfactant.

The content of the surfactant ranges from 0.001 to 20% by mass, preferably from 0.005 to 10% by mass and still preferably from 0.01 to 5% by mass, based on the ink composition.

Methods of preparing an ink composition for inkjet recording are described in detail in JP-A-5-148436, JP-A-5-295312, JP-A-7-97541, JP-A-7-82515 and JP-A-7-118584. These methods are usable in preparing the ink composition according to the invention.

The ink composition according to the invention may contain functional components to impart various functions to the ink. As these functional components, use can be made of, for example, the solvents as described above, an anti-drying agent for preventing clogging at the jetting port due to drying, a penetration promoter for improving the penetration of the ink into paper, an UV absorber, an antioxidant, a viscosity controlling agent, a surface tension controlling agent, a dispersant, a dispersion stabilizer, an antifungal agent, an anti-rusting agent, a pH controlling agent, defoaming agent, a chelating agent and so on. The ink composition according to the invention may contain appropriately selected additives each in an appropriate amount. These additives include those each being capable of exhibiting one or more functions as a single component. In the composition ratio of each functional component as will be discussed below, therefore, one having multiplicity of functions is handled as respective functional components.

As the anti-drying agent to be used in the invention, a water-soluble organic solvent having a vapor pressure lower than water is preferred. Specific examples thereof include polyhydric alcohols typified by ethylene glycol, propylene glycol, diethylene glycol, polyethylene glycol, thiodiglycol, dithiodiglycol, 2-methyl-1,3-propanediol, 1,2,6-hexanetriol, acetylene glycol derivatives, glycerol and trimethylolpropane, polyhydric alcohol lower alkyl ethers such as ethylene glycol monomethyl (or ethyl) ether, diethylene glycol monomethyl (or ethyl) ether and triethylene glycol monoethyl (or butyl) ether, heterocyclic compounds such as 2-pyrrolidone, N-methyl-2-pyrrolidone, 1,3-dimethyl-2-imidazolidinone and N-ethylmorpholine, sulfur-containing compounds such as sulfolane, dimethyl sulfoxide and 3-sulfolene, polyfunctional compounds such as diacetone alcohol and diethanolamine and urea derivatives. Among these compounds, polyhydric alcohols such as glycerol and diethylene glycol are still preferable. Either one of these anti-drying agents or a combination of two or more thereof may be used. It is preferable that the content of such an anti-drying agent in the ink ranges from 10 to 50% by mass.

As the penetration promoter to be used in the invention, it is possible to employ alcohols such as ethanol, isopropanol, butanol, di(tri)ethylene glycol monobutyl ether and 1,2-hexanediol, sodium lauryl sulfate, sodium oleate and nonionic surfactants. Such a penetration promoter exerts a sufficient effect at a content of from 10 to 30% by mass in the ink. It is preferably added in such an amount as not causing print bleeding or print through.

As the UV absorber to be used in the invention in order to improve the image storage properties, use can be made of benzotriazole compounds described in JP-A-58-185677, JP-A-61-190537, JP-A-2-782, JP-A-5-197075, JP-A-9-34057, etc., benzophenone compounds described in JP-A-46-2784, JP-A-5-194483, US Patent 3214463, etc., cinnamic acid compounds described in JP-B-48-30492, JP-B-56-21141, JP-A-10-88106, etc., triazine compounds described in JP-A-4-298503, JP-A-8-53427, JP-A-8-239368, JP-A-10-182621, JP-T-8-501291, etc., compounds described in Research Disclosure No. 24239, and compounds absorbing UV rays and generating fluorescence (i.e., so-called fluorescent whitening agents) typified by stilbene and benzoxazole compounds.

As the antioxidant to be used in the invention for improving image storage properties, use can be made of various discoloration inhibitors of the organic and metal complex types. Examples of the organic discoloration inhibitors include hydroquinones, alkoxyphenols, dialkoxyphenols, phenols, anilines, amines, indanes, chromans, alkoxyanilines and heterocyclic compounds. Examples of the metal complex discoloration inhibitors include nickel complexes and zinc complexes. More specifically speaking, it is possible to employ compounds described in patents cited in Research Disclosure No. 17643, VII-I to J, Research Disclosure No. 15162, Research Disclosure No. 18716, p. 650, left column, Research Disclosure No. 36544, p. 527, Research Disclosure No. 307105, p. 872 and Research Disclosure No. 15162 and compounds included in the general formula of typical compounds and compound examples given in JP-A-62-215272, pp. 127-137.

As the antifungal agent to be used in the invention, citation may be made of sodium dehydroacetate, sodium benzoate, sodium pyridinethione-1-oxide, ethyl ester of p-hydroxybenzoic acid, 1,2-benzisothiazolin-3-one and its salt. It is preferable that such an antifungal agent is used in an amount of from 0.02 to 5.00% by mass in the ink.

These compounds are illustrated in detail in Bokin Bobizai Jiten, (ed. by The Society of Antibacterial and Antifungal Agents, Japan) and so on.

Examples of the anti-rusting agent include acidic sulfites, sodium thiosulfate, ammon thioglycolate, diisopropylammonium nitrite, pentaerythritol tetranitrate, dicyclohexylammonium nitrite, benzotriazole and so on. Such an anti-rusting agent is preferably used in an amount of from 0.02 to 5.00% by mass in the ink.

In the invention, it is appropriate to use a pH controlling agent so as to control the pH value and impart dispersion stability. It is preferable that the pH value of the ink is controlled to 8 to 11 at 25°C. When the pH is lower than 8, the solubility of the ink is worsened and thus nozzle clogging frequently arises. When the pH exceeds 11, on the other hand, the water-proofness of the ink is liable to be worsened. Examples of the pH controlling agent include basic ones such as organic bases and inorganic alkalis and acidic ones such as organic acids and inorganic acids.

Examples of the basic compounds include inorganic compounds such as sodium hydroxide, potassium hydroxide, sodium carbonate, potassium carbonate, sodium hydrogencarbonate, potassium hydrogencarbonate, sodium acetate, potassium acetate, sodium phosphate and sodium monohydrogenphosphate. It is also possible to use organic bases such as aqueous ammonia, methylamine, ethylamine, diethylamine, triethylamine, ethanolamine, diethanolamine, triethanolamine, ethylenediamine, piperidine, diazabicyclooctane, diazabicycloundecene, pyridine, quinoline, picoline, lutidine and collidine.

As the acidic compounds, use can be made of inorganic compounds such as hydrochloric acid, sulfuric acid, phosphoric acid, boric acid, sodium hydrogensulfate, potassium hydrogensulfate, potassium dihydrogenphosphate and sodium dihydrogenphosphate, and organic compounds such as acetic acid, tartaric acid, benzoic acid, trifluoroacetic acid, methanesulfonic acid, ethanesulfonic acid, benzenesulfonic acid, p-toluenesulfonic acid, saccharic acid, phthalic acid, picolinic acid and quinolinic acid.

The conductivity of the ink composition according to the invention ranges from 0.01 to 10 S/m, preferably from 0.05 to 5 S/m.

The conductivity can be measured by the electrode method with the use of a commercially available saturated potassium chloride.

The conductivity can be controlled mainly depending on the ion concentration in an aqueous solution. In the case where the salt concentration is excessively high, desalting can be carried out by using an ultrafiltration membrane, etc. In the case of controlling the conductivity by adding a salt or the like, the controlling can be made by adding various organic salts or inorganic salts.

As an inorganic salt, use can be made of inorganic compounds such as potassium halides, sodium halides, sodium sulfate, potassium sulfate, sodium hydrogen sulfate, potassium hydrogen sulfate, sodium nitrate, potassium nitrate, sodium hydrogencarbonate, potassium hydrogencarbonate, sodium phosphate, sodium monohydrogenphosphate, boric acid, potassium dihydrogenphosphate and sodium dihydrogenphosphate, or organic compounds such as sodium acetate, potassium acetate, potassium tartarate, sodium tartarate, sodium benzoate, potassium benzoate, sodium p-toluenesulfonate, potassium saccharate, potassium phthalate and sodium picolinate.

It is also possible to control the conductivity by appropriately selecting the components of the aqueous medium as will be described hereinafter.

The ink composition according to the invention has a viscosity at 25°C of from 1 to 30 mPa·S, preferably from 2 to 15 mPa·S and still preferably from 2 to 10 mPa·S. When the ink viscosity exceeds 30 mPa·S, the fixation speed of the image is lowered and the jetting performance is worsened. When the ink viscosity is less than 1 mPa·S, on the other hand, the image suffers from bleeding and thus the text qualities are worsened.

The viscosity can be arbitrarily regulated by controlling the addition level of the ink solvent. Examples of the ink solvent include glycerol, diethylene glycol, triethanolamine, 2-pyrrolidone, diethylene glycol monobutyl ether, triethylene glycol monobutyl ether and so on.

It is also possible to employ a viscosity controlling agent. Examples of the viscosity controlling agent include water-soluble polymers such as cellulose and polyvinyl alcohol and nonionic surfactants. These substances are described in greater detail in *Nendo Chosei Gijutsu*, (Technical Information Institute, 1999) chap. 9; and *Inku Jetto Purinta-yo Kemikaruzu* (enlarged in '98) *Zairyo no Kaihatsu Doko Tenbo Chosa,* (CMC, 1997), pp. 162-174.

A method of measuring the viscosity of a liquid is described in detail in JIS Z8803. It can be conveniently measured with a commercially available viscometer, for example, a rotary viscometer such as B-type viscometer and E-type viscometer manufactured by Tokyo Keiki. In the invention, the viscosity is measured at 25°C with the use of a vibratory viscometer Model VM-100A-L manufactured by Yamaichi Electronics.

Although viscosity is expressed in pascal second (Pa·s), millipascal second (mPa·s) is usually employed.

Concerning surface tension, it is preferable that the ink composition according to the invention has a dynamic surface tension and a static surface tension at 25°C both ranging from 20 to 50 mN/m, still preferably from 20 to 40 mN/m. When the surface tension exceeds 50 mN/m, printing qualities (jetting stability, bleeding at color mixing, tailing, etc.) are seriously worsened. When the surface tension of the ink is controlled to 20 mN/m or lower, there sometimes arise printing failures due to the adhesion of the ink to the hard surface at jetting, etc.

In order to control the surface tension, it is possible to add various surfactants such as the above-described cationic, anionic, nonionic and betaine surfactants. It is also possible to employ two or more surfactants together.

For measuring static surface tension, there have been known the capillary rising method, the dropping method, the suspending ring method, etc. In the invention, use is made of the vertical plate method in measuring static surface tension.

Namely, a thin plate made of glass or platinum is suspended vertically while soaking a part thereof in a liquid. Thus the surface tension of the liquid acts downward along the length of the contact of the liquid with the plate. This force is balanced with an upward force, thereby measuring the surface tension.

For measuring dynamic surface tension, on the other hand, there have been known the vibration jet method, the meniscus drop method and the maximum bubble pressure method, as reported in *Shin Jikken Kagaku Koza,* vol.18, *Kaimen to Koroido* (Maruzen, p.69-90 (1977)). Moreover, there has been known a liquid membrane breakage method as reported in JP-A-3-2064. In the invention, a differential bubble pressure method is employed in measuring dynamic surface tension. Next, the measurement principle and method will be illustrated.

When bubbles are formed in a solution having been homogenized by stirring, new gas-liquid interfaces are formed and thus surfactant molecules in the solution aggregate toward the water surface at a definite speed. In the case of altering the bubble rate (i.e., the bubble-formation speed), a larger number of surfactant molecules aggregate toward the bubble surface at a higher formation speed and thus the maximum bubble pressure immediately before the breakage of the bubbles are lowered. Thus, the maximum bubble pressure (surface tension) to the bubble rate can be detected. A preferable method of measuring dynamic surface tension comprising forming bubbles in a solution by using two probes (a small one and a and large one), measuring the pressure difference between the maximum bubble pressures of these two probes and thus calculating the dynamic surface tension.

From the viewpoints of the ink jetting stability, image qualities, image fastness for various factors and prevention of printed image from bleeding and sticking, it is preferable that the content of nonvolatile components in the ink composition according to the invention ranges from 10 to 70% by mass based on the whole ink composition. Taking the ink jetting stability and prevention of the printed image from bleeding, it is still preferable that the content thereof ranges from 20 to 60% by mass.

The term "nonvolatile components" as used herein means liquid components having boiling point of 150°C or higher at 1 atm as well as solid components and high-molecular weight components. The nonvolatile components in the ink composition involve a dye, a high-boiling point solvent, and additives added if necessary such as a polymer latex, a surfactant, a dye stabilizer, an antifungal agent and a buffer. Many of these nonvolatile components excluding the polymer of the invention and the dye stabilizer would lower the dispersion stability of the ink composition. Moreover, they exist on an inkjet image-receiving paper after printing and, therefore, inhibit the stabilization of the dye due to association on the image-receiving paper and worsen the fastness of the image part to various factors and image bleeding under highly humid conditions.

The ink composition according to the invention can further contain a high-molecular weight compound. The term "high-molecular weight compound" as used herein means any high-molecular weight compounds having number-average molecular weight of 5000 or more in the ink composition. Examples of such high-molecular weight compounds include water-soluble high-molecular weight compounds substantially dissolved in the aqueous medium, water-dispersible high-molecular weight compounds such as a polymer latex and a polymer emulsion, and alcohol-soluble high-molecular weight compounds which are soluble in a polyhydric alcohol employed as an auxiliary solvent. Any compounds which are substantially uniformly dissolved or dispersed in the ink composition fall within the category of the high-molecular weight compounds in the invention.

Specific examples of the water-soluble high-molecular weight compounds include water-soluble polymers such as polyvinyl alcohol, silanol-denatured polyvinyl alcohol, carboxymethylcellulose, hydroxyethylcellulose, polyvinylpyrrolidone, polyalkylene oxides such as polyethylene oxide and polypropylene oxide and polyalkylene oxide derivatives, natural water-soluble polymers such as polysaccharides, starch, cationized starch, casein and gelatin, water-base acrylic resins such as polyacrylic acid, polyacrylamide and copolymers thereof, water-base alkyd resins and water-soluble high-molecular weight compounds having -SO₃⁻ or -COO⁻ group in molecule and being substantially soluble in aqueous medium.

Examples of the polymer latex include styrene-butadiene latex, styrene-acryl latex, polyurethane latex and so on. Examples of the polymer emulsion include acryl emulsion and so on.

Either one of these water-soluble high-molecular weight compounds or a combination of two or more thereof may be used.

As discussed above, the water-soluble high-molecular weight compound is employed as a viscosity controlling agent to control the ink composition viscosity to a level giving favorable jetting properties. When the high-molecular weight compound is added in a large amount, the ink composition viscosity is elevated and the jetting stability of the liquid ink is lowered. In this case, a precipitate is formed in the ink composition with the passage of time, thereby frequently causing nozzle clogging.

The high-molecular weight compound employed as a viscosity controlling agent is added in an amount of from 0 to 5% by mass, preferably from 0 to 3% by mass and still preferably from 0 to 1% by mass based on the whole ink composition, though it varies depending on the type of the compound to be added (i.e., a compound with a higher molecular weight is added in a less amount).

Although the high molecular weight compound serving as a viscosity controlling agent may be either the same as the polymer according to the invention or different.

In the invention, use can be also made of the above-described cationic, anionic, nonionic and betaine surfactants as a dispersant and a dispersion stabilizer, fluorine-containing compounds and silicone compounds as a defoaming agent, and chelating agents typified by EDTA and so on, if needed.

### [Inkjet recording method]

In the inkjet recording method according to the invention, energy is supplied to the above-described ink for inkjet recording and thus an image is formed on a publicly known image-receiving material such as plain paper, resin-coated paper, inkjet papers (for example, those reported in JP-A-8-169172, JP-A-8-27693, JP-A-2-276670, JP-A-7-276789, JP-A-9-323475, JP-A-62-238783, JP-A-10-153989, JP-A-10-217473, JP-A-10-235995, JP-A-10-337947, JP-A-10-217597, JP-A-10-337947, etc.), films, electrophotographic papers, fabrics, glasses, metals, ceramics and so on. As the image-receiving material, an image-receiving material having an ink-receiving layer containing inorganic white pigment particles on a substrate is preferred. The statement in JP-A-2003-306623 (paragraphs [0093] to [0105]) is applicable to the inkjet recording method according to the invention.

In the film forming step, it is also possible to use a polymer latex compound in order to impart gloss and water-proofness or improve weatherability. The latex compound may be added to the image-receiving material either before, after or simultaneously with the addition of the coloring agent. Thus, it may be added either to the image-receiving paper or the ink. Alternatively, the polymer latex may be used per se as a liquid. More specifically speaking, use may be preferably made of methods described in JP-A-2002-166638, JP-A-2002-121440, JP-A-2002-154201, JP-A-2002-144696, JP-A-2002-080759, JP-A-2000-299465 and JP-A-2000-297365.

Layers (including a back coat layer) constituting the inkjet recording paper or the recording film may contain a polymer latex. The polymer latex is employed to improve film properties, for example, dimensional stabilization, prevention of curling, prevention of sticking, prevention of film cracking, etc. Such polymer latexes are described in JP-A-62-245258, JP-A-62-1316648 and JP-A-62-110066. By adding a polymer latex having a low glass transition temperature (40°C or lower) to a layer containing a mordant, the layer can be prevented from cracking or curling. By adding a polymer latex having a high glass transition temperature to the back coat layer, curing can be also prevented.

The ink of the invention is usable in any inkjet recording systems without particularly restriction. Namely, the invention is applicable to various publicly known systems, for example, the charge-control system wherein an ink is jetted using static attraction, the drop on demand system (pressure pulse system) with the use of vibration pressure of a piezo element, a sonic inkjet system wherein an electric signal is converted into a sonic beam and irradiated to an ink so that the ink is jetted under the radiation pressure, and the thermal inkjet (bubble jet) system wherein ink is heated to form bubbles and the pressure thus generated is employed.

Inkjet recording systems include a system wherein a large number of inks with low density, which are called photoinks, are jetted each in a small volume; a system wherein plural inks having substantially the same color hue but different densities are employed to improve image qualities; and a system with the use of a colorless and transparent ink.

### [Examples]

To further illustrate the invention, and not by way of limitation, the following Examples will be given.

### [Example 1]

Super-purified water (resistivity: 18 megaΩ or above) was added to the following components to give a total volume of 1 L. Then the mixture was heated to 30 to 40°C under stirring for 1 hour. Next, it was filtered through a microfilter of 0.25 µm in average pore size under reduced pressure to thereby prepare a light magenta ink solution LM-101.

**[Formulation of light magenta ink LM-101]**

| (Solid components) | |
|---|---|
| Magenta colorant (MD-1) | 10 g/l |
| urea | 17 g/l |

| (Liquid components) | |
|---|---|
| Triethylene glycol (TEG) | 110 g/l |
| Glycerol (GR) | 150 g/l |
| Triethylene glycol monobutyl ether (TGB) | 120 g/l |
| Triethanolamine (TEA) | 8 g/l |
| SURFYNOL STG (SW) | 10 g/l |
| (manufactured by Nisshin Chemical Industries and Air Products) | |

Further, a magenta ink solution M-101 was prepared in accordance with the above formulation but increasing the magenta colorant content.

**[Formulation of magenta ink M-101]**

| (Solid components) | |
|---|---|
| Magenta colorant (MD-1) | 30 g/l |
| Urea | 37 g/l |

| (Liquid components) | |
|---|---|
| Triethylene glycol (TEG) | 120 g/l |
| Glycerol (GR) | 150 g/l |
| Triethylene glycol monobutyl ether (TGB) | 130 g/l |
| Triethanolamine (TEA) | 6.9 g/l |
| SURFYNOL STG (SW) | 10 g/l |
| (manufactured by Nisshin Chemical Industries and Air Products) | |

Moreover, inks LM-102 to 108 and M-102 to 108 were prepared respectively in accordance with the formulations of LM-101 and M-101 but adding the following additives.

**Table 1**

| | Additive |
|---|---|
| LM-101, M-101 (Comp. Ex.) | No |
| LM-102, M-102 (Comp. Ex.) | 10 g/l of POEP-1 to LM-101 and M-101 |
| LM-103, M-103 (Comp. Ex.) | 10 g/l of POEN-1 to LM-101 and M-101 |
| LM-104, M-104 (Invention) | 10 g/l of X-1 to LM-101 and M-101 |
| LM-105, M-105 (Invention) | 10 g/l of X-2 to LM-101 and M-101 |
| LM-106, M-106 (Invention) | 10 g/l of X-5 to LM-101 and M-101 |
| LM-107, M-107 (Invention) | 10 g/l of X-8 to LM-101 and M-101 |
| LM-108, M-108 (Invention) | 10 g/l of X-10 to LM-101 and M-1011 |

| | |
|---|---|
| POEP-1: polyoxyethylene nonyl phenyl ether (PEO chain average 30) | |
| POEN-1: polyoxyethylene naphthyl ether (PEO chain average 50) | |

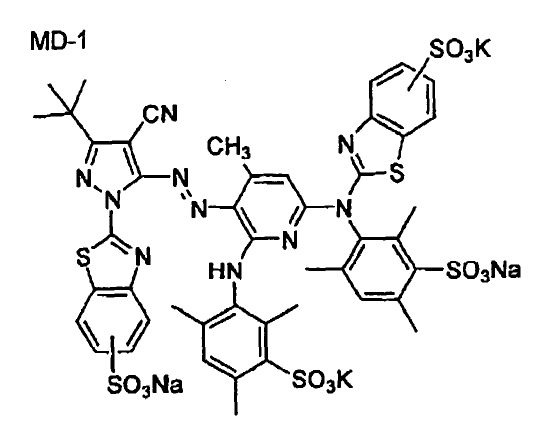

These inks were packed in magenta ink and light magenta ink cartridges of an ink jet printer Model PM-980C (manufactured by EPSON). Using inks of PM-980C in other colors, a monocolor magenta image was printed. As an image-receiving sheet, use was made of a glossy inkjet photopaper *GASAI* manufactured by Fuji Photo Film Co., Ltd. Then the fastness of the image (fastness to ozone, etc.) was evaluated.

### (Evaluation experiment)

[1] Fastness to light was evaluated by measuring the image density immediately after printing (Ci) with X-rite 310, irradiating the printed image with a xenon lamp (85000 lx) using a weather meter (manufactured by Atlas) for 25 days and then measuring the image density (Cf) again to determine the dye residual ratio Cf/Cix100.

Evaluation was made at three reflection density points (1, 1.5 and 2). A means a case wherein dye residual ratios of 70% or higher were established at all density points; B means a case wherein dye residual ratios less than 70% were observed at two points; and C manes a case wherein the dye residual ratios were less than 70% at all points.

[2] Fastness to heat was evaluated by storing a sample at 80°C and 70% RH for 10 days. The density was measured with X-rite 310 before and after storing the sample and evaluation was made by determining the dye residual ratio. Namely, the evaluation was made at three reflection density points (1, 1.5 and 2). A means a case wherein dye residual ratios of 90% or higher were established at all density points; B means a case wherein dye residual ratios less than 90% were observed at two points; and C manes a case wherein the dye residual ratios were less than 90% at all points.

[3] Fastness to ozone was evaluated by storing the glossy photopaper having an image as described above in a box with an ozone level of 5 ppm for 5 days. The image density was measured with a reflection densitometer (X-Rite 310TR) before and after allowing stand under the ozone and evaluation was made by determining the dye residual ratio. Namely, the evaluation was made at three reflection density points (1, 1.5 and 2). The ozone gas level in the box was adjusted with the use of an ozone gas monitor manufactured by APPLICS (model: OZG-EM-01).

A means a case wherein dye residual ratios of 80% or higher were established at all density points; B means a case wherein dye residual ratios less than 80% were observed at two points; and C manes a case wherein the dye residual ratios were less than 70% at all points.

**Table 2**

| | Light fastness | Heat fastness | O₃ fastness |
|---|---|---|---|
| Genuine ink (EPSON PM-950C) | C | B | C |
| LM-101, M-101 (Comp. Ex.) | B | A | B |
| LM-102, M-102 (Comp. Ex.) | B | A | B |
| LM-103, M-103 (Comp. Ex.) | B | A | B |
| LM-104, M-104 (Invention) | A | A | A |
| LM-105, M-105 (Invention) | A | A | A |
| LM-106, M-106 (Invention) | A | A | A |
| LM-107, M-107 (Invention) | A | A | A |
| LM-108, M-108 (Invention) | A | A | A |

The results given in the above table indicate that the systems with the use of the ink sets according to the invention are superior to the comparative examples in all of the image storage factors of the M dye.

### [Example 2]

Super-purified water (resistivity: 18 megaΩ or above) was added to the following components to give a total volume of 1 L. Then the mixture was heated to 30 to 40°C under stirring for 1 hour. Next, it was filtered through a microfilter of 0.25 µm in average pore size under reduced pressure to thereby prepare a photo magenta ink solution LM-201.

**[Formulation of photo magenta ink LM-201]**

| (Solid components) | |
|---|---|
| Magenta colorant (MD-1) | 7 g/l |
| Urea | 22 g/l |

| (Liquid components) | |
|---|---|
| Triethylene glycol (TEG) | 40 g/l |
| Glycerol (GR) | 100 g/l |
| Triethylene glycol monobutyl ether (TGB) | 50 g/l |
| 1,5-Pentanediol | 40 g/l |
| Isopropanol | 20 g/l |
| Triethanolamine (TEA) | 8 g/l |
| SURFYNOL STG (SW) | 10 g/l |
| (manufactured by Nisshin Chemical Industries and Air Products) | |

Further, a magenta ink solution M-201 was prepared in accordance with the above formulation but increasing the magenta colorant content.

**[Formulation of magenta ink M-201]**

| (Solid components) | |
|---|---|
| Magenta colorant (MD-1) | 24 g/l |
| Urea | 37 g/l |

| (Liquid components) | |
|---|---|
| Triethylene glycol (TEG) | 40 g/l |
| Glycerol (GR) | 110 g/l |
| Triethylene glycol monobutyl ether (TGB) | 50 g/l |
| 1,5-Pentanediol | 50 g/l |
| Isopropanol | 20 g/l |
| Triethanolamine (TEA) | 6.9 g/l |
| SURFYNOL STG (SW) | 10 g/l |
| (manufactured by Nisshin Chemical Industries and Air Products) | |

Moreover, inks LM-202 to 208 and M-202 to 208 were prepared respectively in accordance with the formulations of LM-201 and M-201 but adding the following additives.

**Table 3**

| | Additive |
|---|---|
| LM-201, M-201 (Comp. Ex.) | No |
| LM-202, M-202 (Comp. Ex.) | 10 g/l of POEP-1 to IM-201 and M-201 |
| LM-203, M-203 (Comp. Ex.) | 10 g/l of POEN-1 to LM-201 and M-201 |
| LM-204, M-204 (Invention) | 10 g/l of X-1 to LM-201 and M-201 |
| LM-205, M-205 (Invention) | 10 g/l of X-4 to LM-201 and M-201 |
| LM-206, M-206 (Invention) | 10 g/l of X-8 to LM-201 and M-201 |
| LM-207, M-207 (Invention) | 10 g/l of X-9 to LM-201 and M-201 |
| LM-208, M-208 (Invention) | 10 g/l of X-12 to LM-201 and M-2011 |

| | |
|---|---|
| POEP-1: polyoxyethylene nonyl phenyl ether (PEO chain average 30) | |
| POEN-1: polyoxyethylene naphthyl ether (PEO chain average 50) | |

These inks were packed in magenta ink and photo magenta ink cartridges of an ink jet printer Model PIXUS-950i (manufactured by CANON). Using inks of PIXUS-950i in other colors, a monocolor magenta image was printed. As an image-receiving sheet, use was made of a glossy inkjet photopaper *GASAI* manufactured by Fuji Photo Film Co., Ltd. Then the fastness of the image (fastness to ozone, etc.) was evaluated as in Example 1.

The results are given in the following table.

**Table 4**

| | Light fastness | Heat fastness | O₃ fastness |
|---|---|---|---|
| Genuine ink (CANON PIXUS 950i) | C | B | C |
| LM-201, M-201 (Comp. Ex.) | B | A | B |
| LM-202, M-202 (Comp. Ex.) | B | A | B |
| LM-203, M-203 (Comp. Ex.) | B | A | B |
| LM-204, M-204 (Invention) | A | A | A |
| LM-205, M-205 (Invention) | A | A | A |
| LM-206, M-206 (Invention) | A | A | A |
| LM-207, M-207 (Invention) | A | A | A |
| LM-208, M-208 (Invention) | A | A | A |

The results given in the above table indicate that the systems with the use of the ink sets according to the invention are superior to the comparative examples in all of the image storage factors of the M dye.

According to the invention, it is possible to obtain an ink composition, an inkjet ink and an ink set having improved fastness, in particular, fastness to light, fastness to heat and fastness to ozone.

The entire disclosure of each and every foreign patent application from which the benefit of foreign priority has been claimed in the present application is incorporated herein by reference, as if fully set forth.

## Claims

1. An ink composition comprising:
a coloring agent; and
a betaine compound comprising: a group containing an amine form nitrogen atom; and a group containing a phosphonic acid structure or a phosphoric acid structure.

2. The ink composition according to claim 1, which further comprises at least one of a water and a water-miscible organic solvent,
wherein the betaine compound is a compound represented by formula (1):
formula (1): Z-R-Q
wherein Z represents a group containing an amine form nitrogen atom;
Q represents a group containing a phosphonic acid structure or a phosphoric acid structure; and
R represents a single bond or a linking group.

3. The ink composition according to claim 1 or 2,
wherein the betaine compound comprises an oil-soluble group having 8 or more carbon atoms.

4. The ink composition according to any of claims 1 to 3,
wherein the coloring agent is a dye.

5. The ink composition according to any of claims 1 to 4,
wherein the amine form nitrogen atom is an amine form nitrogen atom constituting a primary amine, a secondary amine, a tertiary amine or a quaternary ammonium ion.

6. The ink composition according to any of claims 1 to 4,
wherein the amine form nitrogen atom is a hydrazine form nitrogen atom.

7. The ink composition according to any of claims 1 to 4,
wherein the amine form nitrogen atom is a hydroxylamine form nitrogen atom.

8. The ink composition according to any of claims 1 to 4,
wherein the amine form nitrogen atom is a nitrogen atom with no lone pair in a conjugated system in a 5-membered aromatic heterocycle contained in a pyrazole, an imidazole, a triazole, a tetrazole or a fused polycyclic hetero aromatic compound thereof.

9. The ink composition according to any of claims 1 to 4,
wherein the amine form nitrogen atom is a nitrogen atom contained in a 6-membered aromatic heterocycle.

10. The ink composition according to any of claims 1 to 4,
wherein the amine form nitrogen atom is a nitrogen atom conjugated with an imino group.

11. The ink composition according to any of claims 1 to 10,
wherein the ink composition comprises the betaine compound in an amount of from 0.01 to 20% by mass.

12. An inkjet ink comprising an ink composition according to any of claims 1 to 11.

13. An inkjet ink set comprising at least one inkjet ink according to claim 12.
